(19) Europäisches Patentamt
European Patent Office
Office européen des brevets

(11) EP 3 795 349 B1

(12) EUROPEAN PATENT SPECIFICATION

(45) Date of publication and mention of the grant of the patent:
**21.06.2023 Bulletin 2023/25**

(21) Application number: **19827491.2**

(22) Date of filing: **27.06.2019**

(51) International Patent Classification (IPC):
***B32B 25/10*** *(2006.01)* ***D02G 3/48*** *(2006.01)*
***B32B 7/12*** *(2006.01)* ***C09J 119/02*** *(2006.01)*
***B32B 37/12*** *(2006.01)* ***B60C 9/00*** *(2006.01)*
***B60C 1/00*** *(2006.01)* ***C08L 7/02*** *(2006.01)*
***C08L 9/08*** *(2006.01)* ***C08L 21/02*** *(2006.01)*
***C09D 107/02*** *(2006.01)* ***C09D 109/08*** *(2006.01)*
***C09D 121/02*** *(2006.01)*

(52) Cooperative Patent Classification (CPC):
**B60C 1/0041; B60C 9/0042; B60C 9/005; C08L 7/02; C08L 9/08; C08L 21/02; C09D 107/02; C09D 109/08; C09D 121/02; D02G 3/48;**
B60C 2001/0066; B60C 2001/0083; D10B 2331/02; D10B 2331/021

(86) International application number:
**PCT/KR2019/007828**

(87) International publication number:
**WO 2020/004983 (02.01.2020 Gazette 2020/01)**

# (54) TIRE CORD HAVING HIGH ADHESION AND METHOD OF PREPARING THE SAME

REIFENKORD MIT HOHER HAFTUNG UND VERFAHREN ZUR HERSTELLUNG DAVON

CÂBLE POUR PNEU AYANT UNE HAUTE ADHÉRENCE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2018 KR 20180073873**

(43) Date of publication of application:
**24.03.2021 Bulletin 2021/12**

(73) Proprietor: **Kolon Industries, Inc.**
**Seoul 07793 (KR)**

(72) Inventors:
- **YIM, Jongha**
  **Seoul 07793 (KR)**
- **LEE, Min Ho**
  **Seoul 07793 (KR)**
- **JEON, Ok Hwa**
  **Seoul 07793 (KR)**

(74) Representative: **Ter Meer Steinmeister & Partner Patentanwälte mbB**
**Nymphenburger Straße 4**
**80335 München (DE)**

(56) References cited:
**EP-A1- 1 371 680** **EP-A1- 2 065 220**
**EP-A1- 2 839 972** **EP-A2- 0 695 793**
**KR-A- 20050 090 851** **KR-A- 20130 043 654**
**KR-A- 20170 037 392** **KR-B1- 100 685 272**
**KR-B1- 101 862 255** **US-A1- 2012 211 139**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 795 349 B1

## Description

### [Technical Field]

The present disclosure relates to a tire cord having excellent tackiness and a manufacturing method thereof, and more particularly to a hybrid tire cord having excellent adhesion and a manufacturing method thereof.

### [Background Art]

Recently, as the performance of an automobile and road condition is improved, the driving speed is getting higher. Thus, it is necessary to maintain the stability and durability of the tire even during a high speed driving. For this purpose, lots of studies are made about a tire cord to be used as a reinforcement for a tire rubber.

A tire cord is classified depending on used part and role and is divided into a carcass portion to support the entire tire, a belt portion to support the load and to prevent any deformation that might be caused when a high speed driving is made, and a cap ply portion to prevent any deformation of the belt portion (see FIG. 1). In particular, as the driving speed is getting higher, the belt portion of the tire cord is deformed, thereby causing the degradation of the riding quality. Thus, the cap ply portion to prevent the deformation of the belt portion is getting more important.

Materials used for the belt, carcass and cap ply include, for example, nylon, rayon, aramids and polyesters including PET.

Of them, nylon is used for tires of various sizes since it is less expensive and has excellent adhesion performance and higher adhesiveness both before and after fatigue compared to other materials. One of the major functions of the cap ply is to support the belt during high speed driving. The nylon has high shrinkage stress and thus exhibits excellent performance for supporting the belt during high speed driving. However, the nylon has drawbacks as a material for a cap ply in that a flat spot might be caused due to its low modulus and high changeability between room temperature and high temperature.

The aramid has a lower shrinkage stress, superior creep property and very high modulus as compared with nylon. Also, it exhibits small variation in modulus of aramid under room temperature and high temperature, and thus, when aramid is used, it causes little flat spot phenomenon in tires even after long-term parking. While such aramid has been used for the high-class tires for which the quality of tire is very important, it is difficult to apply to general-purpose tires due to high costs. Furthermore, since the aramid has a high modulus which makes it difficult to expand the tire during the tire forming and vulcanizing processes, it is hard to apply the aramid to the general tires. It has also a disadvantage in that its elongation at break is too low to secure long-term durability.

To compensate for the aforementioned drawbacks, tire cords (or hybrid cords) using a plied twisted yarn of a hybrid structure has been developed which comprises both nylon and aramid. When such plied twisted yarn is used, it can solve the expansion-related problem during the tire-manufacturing process and the fatigue durability problem.

Tire cords composed of fibers such as nylon, rayon, aramid, PET, polyester or hybrid plied twisted yarn are generally rolled together with rubber component for adhesion to rubber, and cutting is performed if necessary. That is, a rolling step and a cutting step are involved during the tire manufacturing process. By the way, if the adhesiveness of the tire core is not excellent in the process of rolling and cutting during the tire manufacturing process, the tire cord may not be evenly arranged and thus, the tire cord may be cut, or the number of tire cords may vary depending on the location.

Therefore, there is a need to develop a tire cord that can be stably used in tire manufacturing.

EP 1 371 680 A1 relates to relates to treated yarn, wherein the treatment comprises application to the yarn of an aqueous emulsion of polyester and/or epoxy adhesive, or an aqueous alkaline dispersion of rubber latex and resorcinol-formaldehyde resin adhesive, and wherein said adhesive contains a minor amount of particulate, water insoluble starch composite of starch and water insoluble plasticizer therefore.

EP 0 695 793 A2 relates to an adhesive composition suitable for adhering to one another rubber and fiber, which composition comprises an adhesive matrix containing a silicate compound comprising, as elements thereof, silicon and magnesium at a ratio by weight of silicon/magnesium of from 10/1 to 1/1.

EP 2 065 220 A1 relates to textile cords comprising a resorcinol-formaldehyde-latex (RFL) adhesive disposed on the surface of the textile cords, wherein the RFL adhesive comprises polyvinylpyrollidone and at least one other elastomer.

EP 2 839 972 A1 relates to a tire having a circumferential tire tread and an underlying and supporting carcass comprising at least one uncured cord reinforced rubber ply extending from spaced apart tire beads through the crown of the tire and a preferably pre-formed laminated tire innerliner, wherein the laminated tire innerliner comprises an alloy film cohesively bonded to said uncured cord reinforced rubber ply, wherein both sides of said alloy film contain an RFL adhesive coating, and wherein said alloy film is cohesively bonded to said uncured cord reinforced rubber ply by said RFL coating on said alloy film.

US 2012/211139 A1 relates to a textile substrate coated with an adhesion composition comprises a non-crosslinked resorcinol-formaldehyde and/or resorcinol-furfural condensate (or a phenolformaldehyde condensate that is soluble in water), a rubber latex, and an aldehyde component such as 2-furfuraldehyde.

## [DETAILED DESCRIPTION OF THE INVENTION]

### [Technical Problem]

The present disclosure has been designed to solve the limitations and problems of the related art as described above.

One aspect of the present disclosure is to provide a tire cord having excellent tackiness and excellent adhesion to rubber.

Another aspect of the present disclosure is to provide a hybrid tire cord having excellent tackiness and excellent adhesion to rubber.

Yet another aspect of the present disclosure is to provide a tire cord capable of minimizing a defective rate in rolling and cutting processes.

The aspects of the present disclosure described above as well as other features and advantages of the present disclosure will be described in the following or will be clearly understood by those skilled in the art from the description.

### [Technical Solution]

In order to achieve that the above objects, an embodiment of the present disclosure provide a tire cord which comprises a textile substrate, an adhesive layer disposed on the textile substrate, and a latex layer disposed on the adhesive layer, wherein the adhesive layer contains resorcinol-formaldehyde-latex (RFL), and wherein the latex layer is formed by a latex dispersion.

The latex dispersion contains 10 to 30% by weight of a latex component and 70 to 90% by weight of a solvent based on the total weight of the latex dispersion.

The latex component includes at least one selected from among natural rubber latex, styrene butadiene rubber latex, butadiene rubber latex, chloroprene rubber latex, isobutylene rubber latex, isoprene rubber latex, nitrile rubber latex, butyl rubber latex and neoprene rubber latex.

The solvent includes at least one selected from water, toluene, naphtha, methanol, xylene and tetrahydrofuran.

The adhesive layer may include an epoxy compound layer that is disposed on the textile substrate; and a RFL layer that is disposed on the epoxy compound layer and includes resorcinol-formaldehyde-latex (RFL).

The textile substrate includes at least one of a fiber yarn and a textile substrate.

The textile substrate includes a hybrid plied-twisted yarn formed by secondarily twisting a nylon primarily-twisted yarn and an aramid primarily-twisted yarn together.

According to an embodiment of the present disclosure, there is provided a method for manufacturing a tire cord comprising: a step of preparing a textile substrate; a step of forming an adhesive layer on the textile substrate; and a step of forming a latex layer on the adhesive layer, wherein the step of forming the adhesive layer includes coating an adhesive coating solution containing resorcinol-formaldehyde-latex (RFL) onto the textile substrate and drying it, and the step of forming the latex layer includes coating a latex dispersion onto the adhesive layer and drying it.

The latex dispersion contains 10 to 30% by weight of a latex component and 70 to 90% by weight of a solvent based on the total weight of the latex dispersion.

The latex component includes at least one selected from among natural rubber latex, styrene butadiene rubber latex, butadiene rubber latex, chloroprene rubber latex, isobutylene rubber latex, isoprene rubber latex, nitrile rubber latex, butyl rubber latex and neoprene rubber latex.

The solvent includes at least one selected from water, toluene, naphtha, methanol, xylene and tetrahydrofuran.

The step of forming the adhesive layer may further include a step of forming an epoxy compound layer on the textile substrate, before coating the adhesive coating solution containing resorcinol-formaldehyde-latex (RFL) onto the textile substrate.

The textile substrate is at least one of a fiber yarn and a textile substrate.

The step of preparing the textile substrate further includes a step of forming a hybrid plied twisted yarn by secondarily twisting a nylon primarily-twisted yarn and an aramid primarily-twisted yarn together.

The step of preparing the textile substrate further includes a step of preparing a textile substrate by weaving the hybrid plied twisted yarn.

Yet another embodiment of the present disclosure provides a tire including the tire cord.

The tire cord is applied to at least one of a cap ply, a belt and a carcass.

The general description of the present disclosure as described above is only for illustrating or explaining the present disclosure, and is not intended to limit the scope of the present disclosure.

## [Advantageous Effects]

The tire cord according to one embodiment of the present disclosure includes an adhesive layer disposed on a textile substrate such as a hybrid ply-twisted yarn or a fabric woven with hybrid plied-twisted yarn, and a latex layer disposed on the adhesive layer, and thus has excellent tackiness. When the tire cord according to an embodiment of the present disclosure is used in the manufacture of a tire, the rolling and cutting steps can be stably performed due to the excellent tackiness of the tire cord. As a result, the defective rate during tire manufacturing can be reduced.
The tire cord according to an embodiment of the present disclosure can be particularly usefully applied to a cap ply, and can also be applied to belts and carcasses.

## [BRIEF DESCRIPTION OF THE DRAWINGS]

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a partially cutaway view of a tire according to one embodiment of the present disclosure.
FIG. 2 is a schematic cross-sectional view of a tire cord according to another embodiment of the present disclosure.
FIG. 3 is a schematic view of a plied twisted yarn.
FIG. 4 is a schematic cross-sectional view of a tire cord according to another embodiment of the present disclosure.
FIG. 5 is a schematic cross-sectional view of a tire cord according to yet another embodiment of the present disclosure.
FIG. 6 is a schematic cross-sectional view of a tire cord according to a further another embodiment of the present disclosure.

## [DETAILED DESCRIPTION OF THE EMBODIMENTS]

Hereinafter, embodiments of the present disclosure will be described with reference to the accompanying drawings.
Those skilled in the art will appreciate that various modifications, additions and substitutions are possible, without departing from the scope and spirit of the invention. Accordingly, the present disclosure includes all alternations and modifications that fall within the scope of inventions described in claims and equivalents thereto.
The shapes, sizes, ratios, angles, numbers, and the like illustrated in the accompanying drawings for describing the exemplary embodiments of the present disclosure are merely examples, and the present disclosure is not limited thereto. Like reference numerals generally denote like elements throughout the specification.
The terms such as "including," "having," and "consist of" used herein are generally intended to allow other components to be added unless the terms are used with the term "only". Any references to singular may include plural unless expressly stated otherwise. Components are interpreted to include an ordinary error range even if not expressly stated.
When the position relation between two parts is described using the terms such as "on", "above", "below", and "next", one or more parts may be positioned between the two parts unless the terms are used with the term "immediately" or "directly" is not used.
When the relation of a time sequential order is described using the terms such as "after", "continuously to", "next to", and "before", a case which is not continuous may be included unless the terms are used with the term "immediately" or "directly".
The term "at least one" should be understood to include all combinations which can be presented from one or more related items.
The features of various embodiments of the present disclosure can be partially or entirely bonded to or combined with each other and can be interlocked and operated in technically various ways, and the embodiments can be carried out independently of or in association with each other.
One embodiment of the present disclosure provides a tire 101 including tire cords 201 and 301.
FIG. 1 is a partially cutaway view of a tire 101 in accordance with one embodiment of the present disclosure.
Referring to FIG. 1, the tire 101 includes a tread 10, a shoulder 20, a side wall 30, a bead 40, a belt 50, an inner liner 60, a carcass 70, and a cap ply 90.
The tread 10 is a part which directly contacts the road surface. The tread 10 is a strong rubber layer attached to the outside of the cap ply 90, and is made of a rubber having excellent abrasion resistance. The tread 10 plays a direct role in transmitting the driving force and braking force of the vehicle to the ground. A groove 80 is formed in the region of the tread 10.
The shoulder 20 is a corner portion of the tread 10 and is a portion connected to the side wall 30. Shoulder 20

is one of the weakest parts of the tire along with the sidewall (30).

The side wall 30 is a side portion of the tire 101 connecting a tread 10 and a bead 40, protects a carcass 70, and provides lateral stability to the tire.

Bead 40 is a region that contains an iron wire winding the end of the carcass 70, and has a structure in which the iron wire is covered with a rubber film to wrap the cord. The bead 40 serves to mount and secure the tire 101 to a wheel rim.

The belt 50 is a coat layer located between the tread 10 and the carcass 70. The belt 50 serves to prevent damage to internal components such as the carcass 70 due to external shocks or external conditions, and allows the shape of the tread 10 to keep flat so that the contact between the tire 101 and the road surface is maintained in an optimum state. The belt 50 may include tire cords 201 and 301 shown in FIGS. 2 and 4.

Inner liner 60 is used in place of tubes in tubeless tires and is made of special rubber that has little or no air permeability. The inner liner 60 prevents the air filled in the tire 101 from leaking.

Carcass 70 is made by overlapping multiple sheets of cord papers made of strong synthetic fibers, and is an important part that forms the skeleton of the tire 101. The carcass 70 serves to withstand the load or impact received by the tire 101 and to maintain the air pressure. The carcass 70 may include tire cords 201 and 301 shown in FIGS. 2 and 4.

Groove 80 refers to a thick void in the tread area. The groove 80 functions to increase drainage of the tire when driving on a wet road surface.

Cap ply 90 is a protective layer under the tread 10 and protects other components therein. The cap ply 90 is essentially applied to a vehicle traveling at high speed. In particular, as the traveling speed of the vehicle increases, problems such as deterioration of ride comfort due to deformation of the belt portion of the tire occur. Thus, the importance of the cap ply 90 to prevent deformation of the belt portion is increasing. Cap ply 90 may be made of tire cords 201 and 301 shown FIGS. 2 and 4.

The tire 101 according to one embodiment of the present disclosure includes tire cords 201 and 301. The tire cords 201 and 301 may be applied to the cap ply 90 and may also be applied to at least one of the belt 50 and the carcass 70.

Other embodiments of the present disclosure provide tire cords 201 and 301. The tire cords 201 and 301 according to other embodiments of the present disclosure include textile substrates 210 and 110, an adhesive layer 220 disposed on the textile substrates 210 and 110, and a latex layer 230 disposed on the adhesive layer 220.

The textile substrate may be any of a fiber yarn and a textile substrate 210. The fiber yarn includes a plied twisted yarn 110.

FIG. 2 is a schematic cross-sectional view of a tire cord 210 according to another embodiment of the present disclosure.

FIG. 2 illustrates that the textile substrate 210 is used as the textile substrate of the tire cord 201. However, an embodiment of the present disclosure is not limited thereto, and a fiber yarn may be used as the textile substrate.

As the textile substrate 210, a fabric formed by weaving the fiber yarn may be used. As the fiber yarn, for example, a plied twisted yarn 110 formed by secondarily twisting two or more primary twist yarns 111 and 112 can be used (see FIG. 3). The fiber yarns may include at least one of nylon, rayon, aramid and polyester including PET.

According to another embodiment of the present disclosure, a fabric made using nylon, rayon, aramid and polyester including PET may be used as a textile substrate 210. For example, the textile substrate 210 may be made by weaving the plied twisted yarn 110 that is formed by secondarily twisting the primarily-twisted yarns 111 and 112 selected among nylon, rayon, aramid and polyester including PET.

According to another embodiment of the present disclosure, the plied twisted yarn 110 includes a hybrid plied twisted yarn that is formed by secondarily twisting two or more primarily-twisted yarns not identical to each other. Such hybrid plied twisted yarn includes, for example, a hybrid plied twisted yarn formed by secondarily twisting a nylon primarily-twisted yarn and an aramid primarily-twisted yarn together.

FIG. 3 is a schematic diagram of the plied twisted yarn 110.

Referring to FIG. 3, the plied twisted yarn 110 includes a first primarily twisted yarn 111 and a second primarily twisted yarn 112. The first primarily-twisted yarn 111 and the second primarily-twisted yarn 112 are secondarily twisted together. The first primarily-twisted yarn 111 has a first twist direction, the second primarily-twisted yarn 112 has a second twist direction, and the first primarily-twisted yarn 111 and the second primarily-twisted yarn 112 are secondarily twisted together in a third twist direction. Here, the second twist direction may be the same direction as the first twist direction, and the third twist direction may be opposite to the first twist direction. However, the twist direction is not limited thereto.

The first twist number and the second twist number may be the same as or different from each other. The first primarily-twisted yarn 111 and the second primarily-twisted yarn 112 may have, for example, a twist number of 150 to 500 TPM.

The first primarily-twisted yarn 111 and the second primarily-twisted yarn 112 may be the same as or different from each other. For example, the first primarily-twisted yarn 111 and the second primarily-twisted yarn 112 may be selected from nylon, rayon, aramid, and polyester including PET, respectively. The plied twisted yarn 110 may include,

for example, a hybrid plied twisted yarn in which the first primarily-twisted yarn 111 is nylon and the second primarily-twisted yarn 112 is aramid.

The plied twisted yarn 110 may be a hybrid plied-twisted yarn formed by secondarily twisting a nylon having low fineness and an aramid having high fineness together, or a hybrid plied-twisted yarn formed by secondarily twisting a nylon having high fineness and an aramid having low fineness together.

Specifically, the ratio of the fineness of the aramid primarily-twisted aramid yarn to the fineness of the nylon primarily-twisted yarn (fineness of the aramid primarily-twisted yarn: fineness of the nylon primarily-twisted yarn) may be 0.1:1 to 4:1, or 0.5:1 to 2:1, or 0.7:1 to 1.5:1.

The adhesive layer 220 includes resorcinol-formaldehyde-latex. For example, the adhesive layer 220 may be formed by an adhesive coating solution containing resorcinol-formaldehyde-latex (RFL) and a solvent. According to another embodiment of the present disclosure, the adhesive coating solution may include 10 to 40% by weight of resorcinol-formaldehyde-latex (RFL) and 40 to 90% by weight of a solvent based on the total weight of the adhesive coating solution. Water ($H_2O$) may be used as a solvent. According to another embodiment of the present disclosure, a layer made of resorcinol-formaldehyde-latex is also referred to as "RFL layer".

According to another embodiment of the present disclosure, the adhesive layer 220 may also include an epoxy compound layer and a resorcinol-formaldehyde-latex (RFL) layer disposed on the epoxy compound layer.

Resorcinol-formaldehyde-latex, also known as "RFL", acts as an adhesive component. Resorcinol-formaldehyde-latex, in particular, improves the affinity and adhesion strength between the textile substrate 210, which is a textile substrate, and the rubber component, improves the adhesion strength between the textile substrate 210 and the rubber compound layer 230, and improves the adhesion strength between the tire cord 201 and the rubber. Consequently, the textile substrate 210 and the latex 230 are stably attached without being separated from each other, and the occurrence of defects in the manufacturing process of the tire 101 is prevented. In addition, after the vulcanizing process, the tire cord 201 and the rubber (e.g., tread, etc.) can be adhered together in the completed tire to maintain excellent adhesion strength.

The latex layer 230 may be formed by a latex dispersion. The latex dispersion includes a latex component and a solvent. For example, the latex dispersion may include 10 to 30% by weight of the latex component and 70 to 90% by weight of the solvent. The latex component contained in the latex dispersion constitutes the latex layer 230.

For example, the latex component may include, for example, at least one selected from among natural rubber (NR) latex, styrene butadiene rubber (SBR) latex, butadiene rubber (BR) latex, chloroprene rubber (CR) latex, isobutylene rubber (IBR) latex, isoprene rubber (IR) latex, nitrile rubber (NBR) latex, butyl rubber latex and neoprene rubber latex.

The type of the solvent is not particularly limited as long as it is a substance capable of dissolving the latex component. For example, the solvent may include at least one selected from water, toluene, naphtha, methanol, xylene and tetrahydrofuran. These solvents may be used alone or in combination.

When the concentration of the latex component in the latex dispersion is less than 10% by weight, the thickness of the latex layer 230 becomes thin, and the tackiness and adhesive strength may not be properly expressed. This causes problems such as a decrease in tire manufacture characteristics and a tire defect during driving.

Meanwhile, when the concentration of the latex component in the latex dispersion exceeds 30% by weight, the stirring property is lowered due to an increase in viscosity, and the dispersibility of the latex dispersion is lowered, whereby the coating property is lowered and the coating thickness can be non-uniform.

The latex layer 230 formed in this way may include at least one selected from natural rubber (NR), styrene butadiene rubber (SBR), butadiene rubber (BR), chloroprene rubber (CR), isobutylene rubber (IBR), isoprene rubber (IR), nitrile rubber (NBR), butyl rubber and neoprene rubber.

The tire cord 201 according to another embodiment of the present disclosure having the above configuration may be applied to a cap ply 90, a belt 50, or a carcass 70 of the tire 101.

The tire cord 201 according to another embodiment of the present disclosure has an adhesive layer 220 disposed on a textile substrate and a latex layer 230, and thus has excellent tackiness. Therefore, when the tire us manufactured using the tire cord 201, the rolling and cutting steps can be stably performed, and as a result, the defective rate can be reduced.

FIG. 4 is a schematic cross-sectional view of a tire cord 301 according to another embodiment of the present disclosure.

The tire cord 301 according to yet another embodiment of the present disclosure includes a plied-twisted yarn 110 as a textile substrate, an adhesive layer 220 disposed on the plied-twisted yarn 110, and a latex layer 230 disposed on the adhesive layer 220.

The tire cord 301 of FIG. 4 illustrates that the plied-twisted yarn 110 is used as a textile substrate. The plied-twisted yarn 110 may be formed by secondarily twisting two or more primarily-twisted yarns 111 and 112 as described above. Specifically, in the tire cord 301 of FIG. 4, a hybrid plied-twisted yarn formed by secondarily twisting a nylon primarily-twisted yarn and an aramid primarily-twisted yarn together as the textile substrate may be used.

However, one embodiment of the present disclosure is not limited thereto, and other plied-twisted yarns known

in the art may be used in the manufacture of the tire cord 301.

Since the plied-twisted yarn 110, the adhesive layer 220 and the latex layer have already been described, detailed description thereof will be omitted to avoid duplication.

FIG. 5 is a schematic cross-sectional view of a tire cord according to yet another embodiment of the present disclosure.

The tire cord 401 of FIG. 5 includes an adhesive layer 220 composed of two layers. More specifically, the adhesive layer 220 includes an epoxy compound layer 221 that is disposed on the textile substrate, and a RFL layer 222 that is disposed on the epoxy compound layer 221 and includes resorcinol-formaldehyde-latex (RFL).

FIG. 5 illustrates that the textile substrate 210 is used as the textile substrate.

The epoxy compound layer 221 m/ay be formed by an epoxy compound dispersion. The RFL layer 222 may be formed by an adhesive coating solution containing resorcinol-formaldehyde-latex (RFL).

FIG. 6 is a schematic cross-sectional view of a tire cord according to a further another embodiment of the present disclosure.

Referring to FIG. 6, the adhesive layer 220 includes an epoxy compound layer 221 that is disposed on the textile substrate, and a RFL layer 222 that is disposed on the epoxy compound layer 221 and includes resorcinol-formaldehyde-latex (RFL). FIG. 6 illustrates that the plied-twisted yarn 110 is used as a textile substrate.

The epoxy compound layer 221 may be formed by an epoxy compound dispersion. The RFL layer 222 may be formed by an adhesive coating solution containing resorcinol-formaldehyde-latex (RFL).

Hereinafter, a method for manufacturing tire cords 201 and 301 according to yet another embodiment of the present disclosure will be described.

A method for manufacturing tire cords 201 and 301 according to another embodiment of the present disclosure includes: a step of preparing textile substrates 210 and 110, a step of forming an adhesive layer 220 on the textile substrates 210 and 110, and a step of forming a latex layer 230 on the adhesive layer 220.

The textile substrates 210 and 110 may be at least one of a fiber yarn and a textile substrate 210. The plied-twisted yarn 110 may be used as a textile yarn. The textile substrate 210 may be made by weaving a fiber yarn. As the plied-twisted yarn, for example, a hybrid plied-twisted yarn composed of two or more primarily-twisted yarns not identical to each other may be used.

The step of preparing the textile substrates 210 and 110 may further include a step of forming a hybrid plied twisted yarn by secondarily twisting a nylon primarily-twisted yarn and an aramid primarily-twisted yarn together. Further, the step of preparing the textile substrate may further include a step of preparing a textile substrate 210 by weaving the hybrid plied twisted yarn.

According to another embodiment of the present disclosure, the hybrid plied twisted yarn may include a nylon primarily-twisted yarn and an aramid primarily-twisted yarn. The nylon primarily-twisted yarn may have a fineness of 300 to 2000 de, and more specifically, it may have a fineness of 1100 to 1400 de. The aramid primarily-twisted yarn may have a fineness of 500 to 3000 de, more specifically it may have a fineness of 1300 to 1700 de.

For example, the primary twisting and secondary twisting were performed simultaneously with a nylon filament of 300 to 2000 de as a first primarily-twisted yarn 111 and an aramid filament of 500 to 3000 de as a second primarily-twisted yarn 112 by means of the Cable Corder twister to produce a plied twisted yarn 110, wherein the primary twisting was performed in the counterclockwise direction and the secondary twisting was performed in the clockwise direction. The plied twisted yarn 110 may have a twist number of 150 to 500 TPM.

The adhesive layer 220 is formed on the textile substrates 210 and 110.

The adhesive layer 220 may be formed by an adhesive coating solution containing a resorcinol-formaldehyde-latex (RFL) and a solvent. The step of forming of the adhesive layer 220 may include a step of coating an adhesive coating solution onto the textile substrates 210 and 110 and drying it. A step of heat treatment may be performed simultaneously with the drying step or after the drying step.

The adhesive coating solution contains 10 to 40% by weight of resorcinol-formaldehyde-latex (RFL) and 40 to 90% by weight of a solvent based on the total weight of the adhesive coating solution. The type of the solvent is not particularly limited, and any solvent capable of dissolving or dispersing resorcinol-formaldehyde-latex (RFL) may be used as a solvent without limitation. For example, water ($H_2O$) can be used as a solvent.

The method of coating the adhesive coating solution onto the textile substrates 210 and 110 is not particularly limited. For example, the adhesive coating solution may be coated onto the textile substrates 210 and 110 by dipping the textile substrates 210 and 110 in the adhesive coating solution. For example, a dipping step may be performed by passing the textile substrates 210 and 110 through the adhesive coating solution. The dipping step may be performed with a dipping machine in which tension, dipping time and temperature can be adjusted.

The adhesive coating solution may be coated onto the textile substrates 210 and 110 by either coating using a blade or a coater or spraying using an injector in addition to the dipping step.

The step of forming the adhesive layer 220 may further include a step of coating an adhesive coating solution onto the textile substrates 210 and 110 and performing a heat treatment at 130 to 170°C for 80 to 120 seconds. The

heat treatment may be performed with a heat treatment apparatus. The resorcinol-formaldehyde-latex (RFL) layer 222 is cured and fixed by the heat treatment to complete the adhesive layer 220. By this heat treatment, the adhesive layer 220 may be more stably formed.

According to another embodiment of the present disclosure, the step of forming the adhesive layer 220 may further include a step of forming an epoxy compound layer 221 on the textile substrates 210 and 110, before coating the adhesive coating solution containing resorcinol-formaldehyde-latex (RFL) onto the textile substrates 210 and 110.

The forming of the epoxy compound layer 221 may include dipping the textile substrates 210 and 110 in an epoxy compound dispersion and drying it. The epoxy compound dispersion may contain 1 to 10% by weight of an epoxy compound and 90 to 99% by weight of a solvent based on the total weight of the epoxy compound dispersion. Water ($H_2O$) can be used as the solvent.

When the epoxy compound layer 221 is formed on the textile substrates 210 and 110, the adhesive coating solution containing resorcinol-formaldehyde-latex (RFL) is coated onto the epoxy compound layer 221, and the layer formed by the adhesive coating solution containing resorcinol-formaldehyde-latex (RFL) is referred to as a RFL layer 222.

After the adhesive layer 220 is formed, a latex layer 230 is formed on the adhesive layer 220.

The step of forming the latex layer 230 includes coating the latex dispersion onto the adhesive layer 220 and drying it.

The latex dispersion contains a latex component and a solvent. Specifically, the latex dispersion contains 10 to 30% by weight of a latex component and 70 to 90% by weight of a solvent based on the total weight of the latex dispersion.

The latex component may include at least one selected from among natural rubber latex, styrene butadiene rubber latex, butadiene rubber latex, chloroprene rubber latex, isobutylene rubber latex, isoprene rubber latex, nitrile rubber latex, butyl rubber latex and neoprene rubber latex.

Specifically, the styrene butadiene rubber latex may include at least one repeating unit selected from the group consisting of a repeating unit represented by the following Chemical Formula 1, a repeating unit represented by the following Chemical Formula 2 and a repeating unit represented by the following Chemical Formula 3:

[Chemical Formula 1]

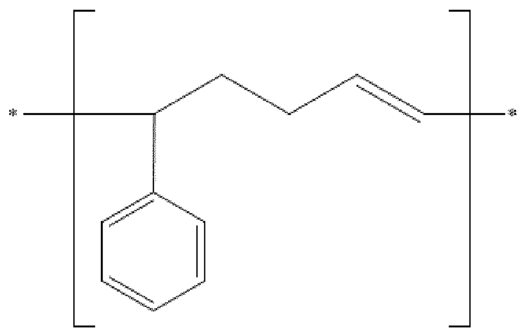

[Chemical Formula 2]

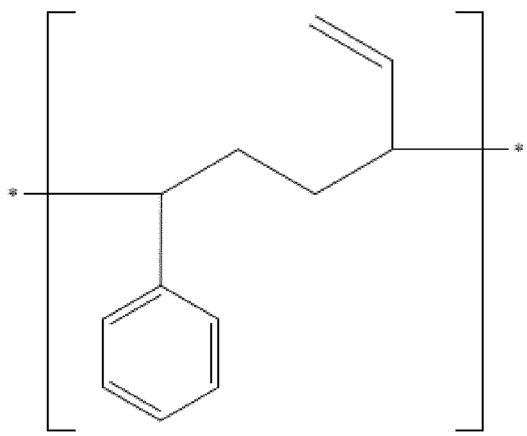

[Chemical Formula 3]

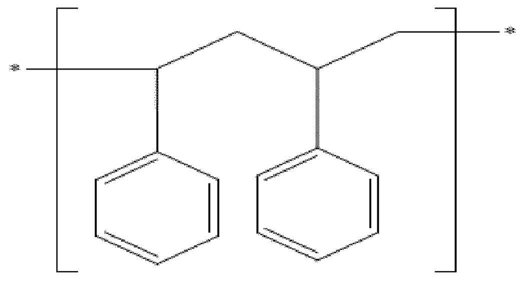

Chemical Formulas 1 and 2 correspond to repeating units in which styrene and butadiene monomers are polymerized, and Chemical Formula 3 corresponds to a repeating unit in which a styrene monomer is polymerized.

The styrene butadiene rubber latex may include one of the repeating unit represented by Chemical Formula 1, the repeating unit represented by Chemical Formula 2, and the repeating units represented by Chemical Formula 3, or a mixture of two of them, or a mixture of all three of them.

In the styrene-butadiene rubber latex, one or more repeating units selected from the group consisting of the repeating unit represented by Chemical Formula 1, the repeating unit represented by Chemical Formula 2, and the repeating unit represented by Chemical Formula 3 may form a block or random copolymer.

Preferably, the styrene butadiene rubber latex may include a repeating unit represented by the following Formula A.

[Chemical Formula A]

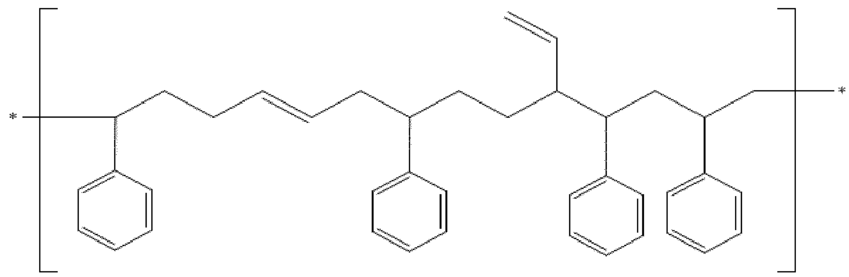

Further, the natural rubber (NR) latex may include a repeating unit represented by the following Formula 4. The repeating unit represented by Formula 4 may be a repeating unit derived from an isoprene monomer.

[Chemical Formula 4]

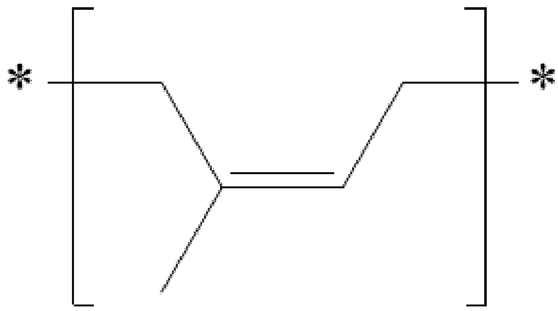

The solvent may include at least one selected from water, toluene, naphtha, methanol, xylene, and tetrahydrofuran, and these solvents may be used alone or in combination.

When the concentration of the latex component in the latex dispersion is less than 10% by weight, the thickness of the latex layer 230 becomes thin and the tackiness and adhesive strength may not be properly expressed. On the

other hand, when the concentration of the latex component in the latex dispersion exceeds 30% by weight, the stirring property of the adhesive solution is lowered due to the increase in viscosity, and the dispersibility of the latex dispersion is lowered, whereby the coating property is lowered and the coating thickness can be non-uniform. Therefore, in the latex dispersion, the concentration of the latex component is adjusted in the range of 10 to 30% by weight.

The method of coating the latex dispersion onto the adhesive layer 220 is not particularly limited, and a known coating method may be applied.

For example, in order to form the latex layer 230, the textile substrates 210 and 110 coated with the adhesive layer 220 may be dipped in the latex dispersion. By this dipping, a latex dispersion is coated onto the adhesive layer 220.

In addition, the latex dispersion may be coated onto the adhesive layer 220 by a comma coating using a comma coater. At this time, the coating may be performed at a temperature condition of 80 to 100°C.

However, another embodiment of the present disclosure is not limited thereto, and the latex dispersion may be coated by a gravure coating method, a micro gravure coating method, or the like.

After the latex dispersion is coated, the coated latex dispersion may be subjected to heat treatment. The heat treatment may be performed simultaneously with drying the latex dispersion or after drying.

The heat treatment may be performed by a heat treatment apparatus. For the heat treatment, heat may be applied for 30 to 150 seconds at a temperature of 80 to 160 °C. As a result, the latex layer 230 is formed on the adhesive layer 220.

Through this process, the tire cords 201 and 301 are produced, and the produced tire cords 201 and 301 are wound around the winder.

Next, a cutting step may optionally be performed.

The method may further include a step of cutting the tire cord 201 made in a plate shape so as to meet the purpose of use or as necessary. This step is referred to as called cutting or slitting. The cutting step may be omitted. The method of cutting or slitting is not particularly limited.

Through such a process, the tire cords 201 and 301 according to the embodiments of the present disclosure is completed.

The tire cord 201 according to one embodiment of the present disclosure has excellent adhesion to the rubber, and it can be easily attached to the rubber. When such a tire cord 201 is used as the cap ply 90, the tackiness of the cap ply 90 is greatly increased, and the air pocket is reduced at the time of manufacturing green tires, thereby reducing the defective rate of the tire.

The tire cords 201 and 301 according to an embodiment of the present disclosure may be applied to at least one of a belt and a carcass in addition to the case applied to the cap ply 90.

Hereinafter, the operation and effects of the invention will be described in more detail by way of specific production examples and comparative examples. However, these production examples and comparative examples are presented for illustrative purposes only and the scope of the invention is not limited thereby.

**<Example 1>**

(1) Preparation of textile substrate: Preparation of nylon/aramid plied twisted yarn woven fabric

The primary twisting and secondary twisting were performed simultaneously with a nylon filament of 1260 de (first primarily-twisted yarn, product name: Kordsa T728) and an aramid filament of 1500 de (second primarily-twisted yarn, product name: Heracron) by means of a Cable Corder twister to produce a plied twisted yarn 110, wherein the primary twisting was performed in the counterclockwise direction and the secondary twisting was performed in the clockwise direction. The twist number of the plied twisted yarn 110 was 300 TPM.

A fabric was woven by using the plied twisted yarn 110 prepared in this manner as a warp yarn and using a cotton yarn as a weft yarn, and thereby, a textile substrate 210 in the form of a fabric was prepared. The textile substrate 210 thus prepared was used as the textile substrate.

(2) Formation of Adhesive Layer

The textile substrate 210 was dipped in the adhesive coating solution, and then heat-treated to complete the adhesive layer 220. At this time, the adhesive coating solution contains 15 wt% of resorcinol-formaldehyde-latex (RFL) and 85 wt% of a solvent (water, $H_2O$) based on the total weight. The adhesive coating solution coated onto the textile substrate 210 was dried by heat treatment at 150°C for 100 seconds, and again heat-treated at 240°C for 100 seconds.

(3) Formation of latex layer

Water ($H_2O$) as a solvent and a natural rubber (NR) latex which is a latex component containing isoprene as

a monomer, was mixed in a ratio of 9:1 based on a weight ratio to prepare a latex dispersion.

The textile substrate 210 on which the adhesive layer 220 was formed was dipped in the latex dispersion, and the latex dispersion was coated onto the adhesive layer 220, and dried to evaporate the solvent, thereby forming the latex layer 230. As a result, a tire cord 201 was manufactured.

(4) Manufacture of tire cord for cap ply that has been cut to the standard

The tire cord 201 thus prepared was cut to a width of 10 mm to manufacture a tire cord for the cap ply 90. Cutter Knife was used for cutting.

(5) Tire manufacturing

Tires of the 205/55R16 size were manufactured using the cut tire cord 210. For tire manufacturing, the body plies and steel cord belts containing 1300De/2ply HMLS tire cords were used.

First, a rubber layer having a thickness of 1.6 mm was placed on the latex layer 230 of the cut tire cord 210 and rolled to form a rubber layer on the tire cord 210.

Next, the body ply rubber was laminated on the inner liner rubber, the bead wire and the belt part were laminated, and the tire cord 210 including the prepared rubber layer was added. Rubber layers for forming a tread part, a shoulder part and a side wall part were sequentially formed, thereby producing a green tire. The green tire thus produced was put in a vulcanization mold and vulcanized at 170°C for 15 minutes to manufacture a tire.

**<Example 2>**

A tire was manufactured in the same manner as in Example 1, except that in the formation of the latex layer 230, water ($H_2O$) as a solvent and natural rubber (NR) latex as a latex component were mixed in a ratio of 8:2 based on the weight ratio to prepare a latex dispersion.

**<Example 3>**

A tire was manufactured in the same manner as in Example 1, except that in the formation of the latex layer 230, water ($H_2O$) as a solvent and natural rubber (NR) latex as a latex component were mixed in a ratio of 7:3 based on the weight ratio to prepare a latex dispersion.

**<Example 4>**

A tire was manufactured in the same manner as in Example 2, except that in the formation of the latex layer 230, a styrene butadiene rubber (SBR) latex containing a repeating unit represented by the following Chemical Formula A was used instead of natural rubber (NR) latex as a latex component.

[Chemical Formula A]

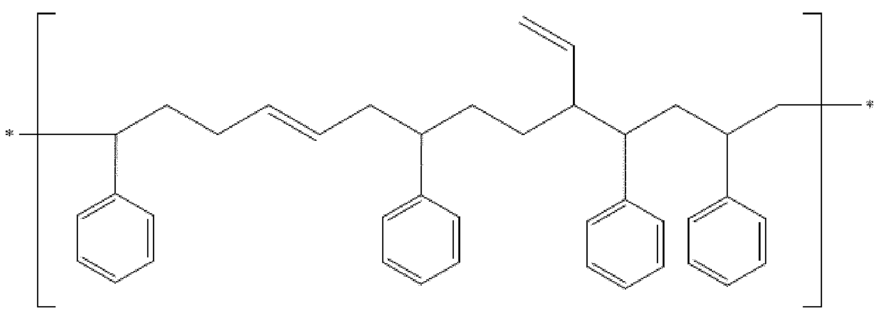

**<Comparative Example 1>**

A tire was manufactured in the same manner as in Example 1, except that the latex layer 230 was not formed after the adhesive layer 220 was formed.

**<Test Example>**

(1) Tacky strength test

The unvulcanized rubber (thickness: 1.3 mm) used for the carcass layer was cut into 10cm x 20cm (width x length), and a PET film of 2 cm x 15 cm (width x length) was attached to the top of the cut unvulcanized rubber. The tire cords produced in Examples 1-4 and Comparative Example 1 were laminated on the unvulcanized rubber to which PET film was attached. Then, the tire cord was pressed three times using a metal cylindrical weight with a load of 5 kgf to produce a tacky layer composite.

The adhesive layer composite prepared in this way was cut into a length of 2 to 2.4 cm, and then was again pressed three times using a metal cylindrical weight with a load of 5 kgf to compress the unvulcanized rubber. Next, a Scotch Tape™ was attached to the exposed surface of the tire cord produced in Examples 1-4 and Comparative Example 1 to prevent the specimen from being stretched, and then the tacky strength of the tire cord was measured by the PEEL test method using Instron Clampe (Grip, CAT. No. 2712-041). At this time, the cross head speed was 125 mm/min.

(2) Adhesive strength (PEEL) test

In accordance with ASTM D4393-American Society for Testing and Materials Testing Standard, the adhesive peel strength of the tire cords manufactured in Examples 1 to 4 and Comparative Example 1 on the carcass layer of the tire was measured. Specifically, 1.6 mm thick rubber sheet, cord paper, each tire cord manufactured in Examples 1 to 4 and Comparative Example 1, 1.6 mm thick rubber sheet, cord paper, and 1.6 mm thick rubber sheet were sequentially stacked to prepare a sample, which was then vulcanized at 160°C under a pressure of 60 kg/cm$^2$ for 20 minutes. Next, the vulcanized sample was cut to prepare a specimen having a width of 1 inch. The specimen thus prepared was subjected to a peel test at a rate of 125 mm/min at 25°C using a universal testing machine (Instron Co., Ltd.), and then the adhesive peel strength of the tire cord manufactured in Examples 1 to 4 and Comparative Example 1 on the carcass layer was measured. At this time, the average value of the load generated at the time of peeling was calculated by an adhesive strength.

(3) Tire Manufacture Defect Rate

The incidence of defects during the manufacturing process according to Examples 1 to 4 and Comparative Example 1 was investigated. Because of the characteristics of the tire manufacturing process, when the tire cord maintains the adhesive strength above a certain level, the tire cord can adhere to the rubber without causing a phenomenon of flowing to proceed up to the tire manufacturing process. If the tire cords does not have an adhesive strength above a certain level, defects due to flowing down during tire manufacturing can occur. In addition, if air pockets occur in the latex layer, interfacial separation may occur in the latex layer, resulting in tire defects.

Twenty tires were manufactured for each of Examples 1 to 4 and Comparative Example 1, and the presence or absence of defects was confirmed, and a defective rate during tire manufacturing was obtained according to the following Equation 1.

[Equation 1]

$$\text{Tire manufacturing defect rate (\%)} = [(\text{Number of good tires})/(20, \text{Number of tires evaluated})]\times 100$$

The results measured above are shown in Table 1 below.

[Table 1]

| Category | Example 1 | Example 2 | Example 3 | Example 4 | Comparative Example 1 |
|---|---|---|---|---|---|
| Latex component | NR latex | NR latex | NR latex | SBR latex | - |
| Solvent | water | water | water | water | - |
| Weight ratio of solvent and latex component (solvent: latex component) | 9:1 | 8;2 | 7:3 | 8:2 | - |

(continued)

| Category | Example 1 | Example 2 | Example 3 | Example 4 | Comparative Example 1 |
|---|---|---|---|---|---|
| Tacky strength (N/12mm) | 0.59 | 7.35 | 2.74 | 0.32 | 0 |
| Adhesive strength (N/12mm) | 149.8 | 148.4 | 132.1 | 152.4 | 150.1 |
| Defective rate(%) | 20 | 0 | 10 | 30 | 50 |

Referring to Table 1, it can be seen that in the case of Examples 1 to 4 according to the present disclosure, the defective rate was reduced by 40% or more compared with Comparative Example 1 according to the conventional method.

The tire cord according to the present disclosure has excellent tacky and thus the occurrence of air pockets is reduced compared during the tire manufacturing, and the rolling and cutting steps can be stably performed, so that a defective rate during tire manufacturing was greatly increased.

[Explanation of Symbols]

| | |
|---|---|
| 10: tread | 20: shoulder |
| 30: side wall | 40: bead |
| 50: belt | 60: inner liner |
| 70: carcass | 80: groove |
| 90: cap ply | 101: tire |
| 110: Plied twisted yarn | 111: first primarily-twisted yar |
| 112: second primarily-twisted yarn | 201, 301: tire cords |
| 210: textile substrate | 220: adhesive layer |
| 220: epoxy compound layer | 222: RFL layer |
| 230: latex layer | |

## Claims

**1.** A tire cord comprising:

a textile substrate,
an adhesive layer disposed on the textile substrate, and
a latex layer disposed on the adhesive layer,
wherein the adhesive layer includes resorcinol-formaldehyde-latex (RFL),
wherein the latex layer is formed by a latex dispersion
wherein latex dispersion contains 10 to 30% by weight of a latex component and 70 to 90% by weight of a solvent based on the total weight of the latex dispersion, and
wherein the latex component comprises at least one selected from among natural rubber latex, styrene butadiene rubber latex, butadiene rubber latex, chloroprene rubber latex, isobutylene rubber latex, isoprene rubber latex, nitrile rubber latex, butyl rubber latex and neoprene rubber latex.

**2.** The tire cord according to claim 1,
wherein the styrene butadiene rubber latex comprises at least one repeating unit selected from the group consisting of a repeating unit represented by the following Chemical Formula 1, a repeating unit represented by the following Chemical Formula 2 and a repeating unit represented by the following Chemical Formula 3:

[Chemical Formula 1]

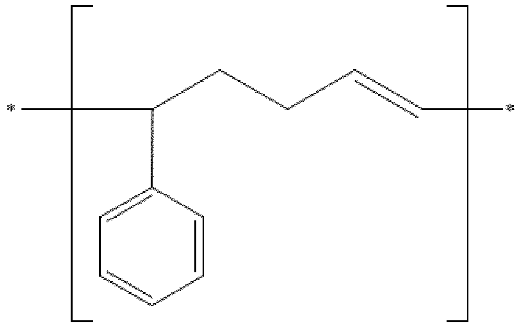

[Chemical Formula 2]

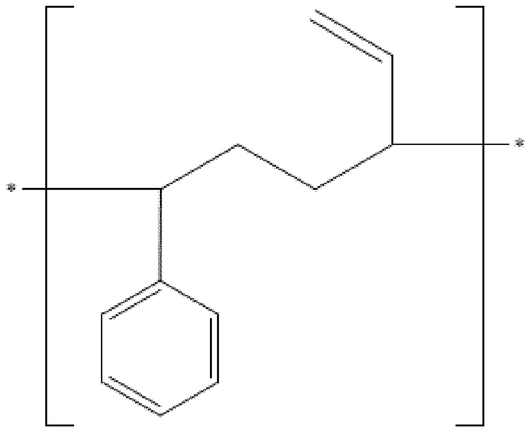

[Chemical Formula 3]

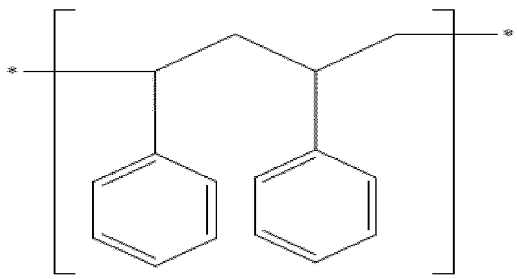

**3.** The tire cord according to claim 1,
wherein the solvent includes at least one selected from water, toluene, naphtha, methanol, xylene and tetrahydrofuran.

**4.** The tire cord according to claim 1,

wherein the adhesive layer comprises,
an epoxy compound layer that is disposed on the textile substrate; and
a RFL layer that is disposed on the epoxy compound layer and includes resorcinol-formaldehyde-latex (RFL).

**5.** The tire cord according to claim 1,
wherein the textile substrate includes at least one of a fiber yarn and a textile substrate.

**6.** The tire cord according to claim 1,
wherein the textile substrate includes a hybrid plied-twisted yarn formed by secondarily twisting a nylon primarily-twisted yarn and an aramid primarily-twisted yarn together.

7. The tire cord according to claim 6,
wherein the hybrid plied-twisted yarn has a twist number of 150 TPM or more.

8. A method for manufacturing a tire cord comprising:

a step of preparing a textile substrate;
a step of forming an adhesive layer on the textile substrate; and
a step of forming a latex layer on the adhesive layer
wherein the step of forming the adhesive layer includes coating an adhesive coating solution containing resorcinol-formaldehyde-latex (RFL) onto the textile substrate and drying it,
the step of forming the latex layer includes coating a latex dispersion onto the adhesive layer and drying it,
wherein latex dispersion contains 10 to 30% by weight of a latex component and 70 to 90% by weight of a solvent based on the total weight of the latex dispersion, and wherein the latex component comprises at least one selected from among natural rubber latex, styrene butadiene rubber latex, butadiene rubber latex, chloroprene rubber latex, isobutylene rubber latex, isoprene rubber latex, nitrile rubber latex, butyl rubber latex and neoprene rubber latex.

9. The method according to claim 8,
wherein the solvent includes at least one selected from water, toluene, naphtha, methanol, xylene and tetrahydrofuran.

10. The method according to claim 8, further comprising a step of forming an epoxy compound layer on the textile substrate, before coating the adhesive coating solution containing resorcinol-formaldehyde-latex (RFL) onto the textile substrate.

11. The method according to claim 8,
wherein the textile substrate includes at least one of a fiber yarn and a textile substrate.

12. The method according to claim 8,
wherein the step of preparing the textile substrate further comprises a step of forming a hybrid plied twisted yarn by secondarily twisting a nylon primarily-twisted yarn and an aramid primarily-twisted yarn together.

13. The method according to claim 12,
wherein the step of preparing the textile substrate further comprises a step of preparing a textile substrate by weaving the hybrid plied twisted yarn.

14. A tire comprising the tire cord of any one of claims 1 to 7.

15. The tire according to claim 14,
the tire cord is applied to at least one of a cap ply, a belt and a carcass.

## Patentansprüche

1. Reifencord, umfassend

ein Textilsubstrat,
eine Klebstoffschicht, die auf dem Textilsubstrat angeordnet ist, und
eine Latexschicht, die auf der Klebstoffschicht angeordnet ist,
wobei die Klebstoffschicht Resorcin-Formaldehyd-Latex (RFL) enthält,
wobei die Latexschicht durch eine Latexdispersion gebildet ist,
wobei die Latexdispersion 10 bis 30 Gew.-% einer Latexkomponente und 70 bis 90 Gew.-% eines Lösungsmittels, bezogen auf das Gesamtgewicht der Latexdispersion, enthält, und
wobei die Latexkomponente mindestens einen, ausgewählt aus Naturkautschuklatex, Styrol-Butadien-Kautschuklatex, Butadien-Kautschuklatex, Chloropren-Kautschuklatex, Isobutylen-Kautschuklatex, Isopren-Kautschuklatex, Nitril-Kautschuklatex, Butyl-Kautschuklatex und Neopren-Kautschuklatex, umfasst.

2. Reifencord nach Anspruch 1,
wobei der Styrol-Butadien-Kautschuklatex mindestens eine Wiederholungseinheit umfasst, die aus der Gruppe bestehend aus einer Wiederholungseinheit, die durch die folgende chemische Formel 1 dargestellt wird, einer Wiederholungseinheit, die durch die folgende chemische Formel 2 dargestellt wird, und einer Wiederholungseinheit, die durch die folgende chemische Formel 3 dargestellt wird, ausgewählt ist:

[Chemische Formel 1]

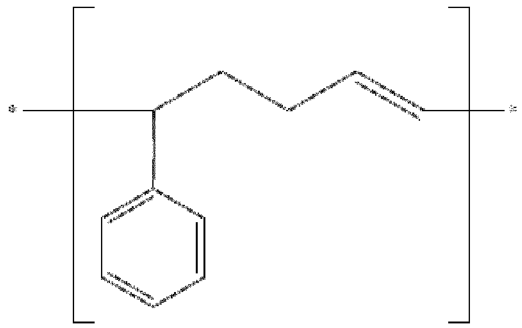

[Chemische Formel 2]

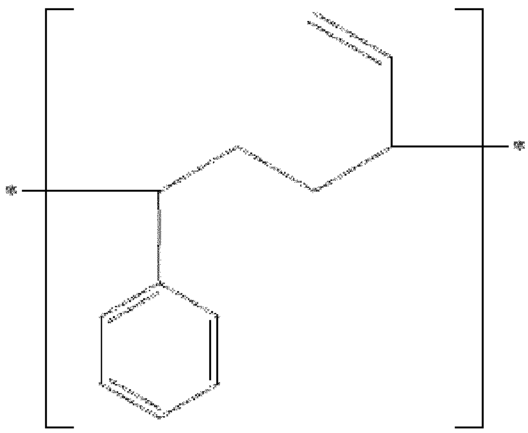

[Chemische Formel 3]

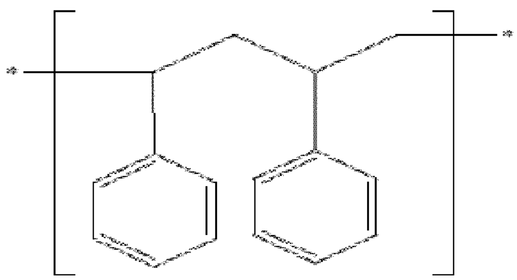

3. Reifencord nach Anspruch 1, wobei das Lösungsmittel mindestens eines, ausgewählt aus Wasser, Toluol, Naphtha, Methanol, Xylol und Tetrahydrofuran, enthält.

4. Reifencord nach Anspruch 1, wobei die Klebstoffschicht eine Epoxidverbindungsschicht, die auf dem Textilsubstrat angeordnet ist; und eine RFL-Schicht, die auf der Epoxidverbindungsschicht angeordnet ist und Resorcin-Formaldehyd-Latex (RFL) enthält, umfasst.

5. Reifencord nach Anspruch 1, wobei das Textilsubstrat mindestens eines aus einem Fasergarn und einem Textilsubstrat enthält.

6. Reifencord nach Anspruch 1, wobei das Textilsubstrat ein zwirngedrehtes Hybridgarn enthält, das durch sekundäres Zusammenzwirnen eines primär gezwirnten Nylongarns und eines primär gezwirnten Aramidgarns gebildet wird.

7. Reifencord nach Anspruch 6, wobei das zwirngedrehte Hybridgarn eine Drehungszahl von 150 TPM oder mehr aufweist.

8. Verfahren zur Herstellung eines Reifencords, umfassend:

einen Schritt der Vorbereitung eines Textilsubstrats;
einen Schritt der Bildung einer Klebstoffschicht auf dem Textilsubstrat; und
einen Schritt zur Bildung einer Latexschicht auf der Klebstoffschicht,
wobei der Schritt der Bildung der Klebstoffschicht das Auftragen einer Resorcin-Formaldehyd-Latex (RFL) enthaltenden Klebstoffbeschichtungslösung auf das Textilsubstrat und das Trocknen desselben umfasst,
der Schritt der Bildung der Latexschicht das Auftragen einer Latexdispersion auf die Klebstoffschicht und das Trocknen derselben umfasst,
wobei die Latexdispersion 10 bis 30 Gew.-% einer Latexkomponente und 70 bis 90 Gew.-% eines Lösungsmittels, bezogen auf das Gesamtgewicht der Latexdispersion, enthält, und
wobei die Latexkomponente mindestens einen, ausgewählt aus Naturkautschuklatex, Styrol-Butadien-Kautschuklatex, Butadien-Kautschuklatex, Chloropren-Kautschuklatex, Isobutylen-Kautschuklatex, Isopren-Kautschuklatex, Nitril-Kautschuklatex, Butyl-Kautschuklatex und Neopren-Kautschuklatex, umfasst.

9. Verfahren nach Anspruch 8, wobei das Lösungsmittel mindestens eines, ausgewählt aus Wasser, Toluol, Naphtha, Methanol, Xylol und Tetrahydrofuran, umfasst.

10. Verfahren nach Anspruch 8, das ferner einen Schritt der Bildung einer Epoxidverbindungsschicht auf dem Textilsubstrat umfasst, bevor die Resorcin-Formaldehyd-Latex (RFL) enthaltende Klebstoffbeschichtungslösung auf das Textilsubstrat aufgetragen wird.

11. Verfahren nach Anspruch 8, wobei das Textilsubstrat mindestens eines aus einem Fasergarn und einem Textilsubstrat enthält.

12. Verfahren nach Anspruch 8, wobei der Schritt der Herstellung des Textilsubstrats ferner einen Schritt der Bildung eines zwirngedrehten Hybridgarns durch sekundäres Zusammenzwirnen eines primär gezwirnten Nylongarns und eines primär gezwirnten Aramidgarns umfasst.

13. Verfahren nach Anspruch 12, wobei der Schritt der Herstellung des Textilsubstrats ferner einen Schritt der Herstellung eines Textilsubstrats durch Weben des zwirngedrehten Hybridgarns umfasst.

14. Reifen, umfassend den Reifencord nach einem der Ansprüche 1 bis 7.

15. Reifen nach Anspruch 14, wobei der Reifencord auf mindestens eines aus einer Decklage, einem Gürtel und einer Karkasse aufgebracht ist.

**Revendications**

1. Câble pour pneumatique comportant :

un support textile,
une couche d'adhésif disposée sur le support textile, et
une couche de latex disposée sur la couche d'adhésif,
dans lequel la couche d'adhésif inclut du résorcinol-formaldéhyde-latex (RFL),
dans lequel la couche de latex est formée par une dispersion de latex,
dans lequel la dispersion de latex contient 10 à 30 % en poids d'un composant latex et 70 à 90 % en poids d'un solvant basé sur le poids total de la dispersion de latex, et

dans lequel le composant latex comporte au moins un élément choisi parmi un latex de caoutchouc naturel, un latex de caoutchouc styrène-butadiène, un latex de caoutchouc butadiène, un latex de caoutchouc chloroprène, un latex de caoutchouc isobutylène, un latex de caoutchouc isoprène, un latex de caoutchouc nitrile, un latex de caoutchouc butyle et un latex de caoutchouc néoprène.

**2.** Câble pour pneumatique selon la revendication 1,
dans lequel le latex de caoutchouc styrène butadiène comporte au moins un motif répété choisi parmi le groupe constitué d'un motif répété représenté par la Formule chimique 1 suivante, un motif répété représenté par la Formule chimique 2 suivante et un motif répété représenté par la Formule chimique 3 suivante :

[Formule chimique 1]

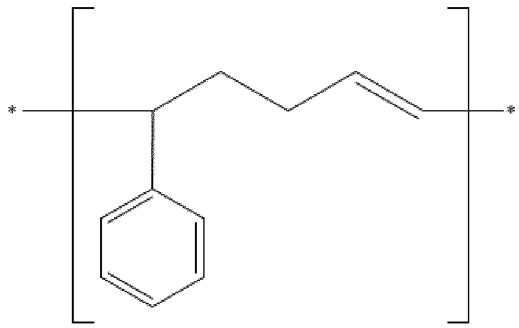

[Formule chimique 2]

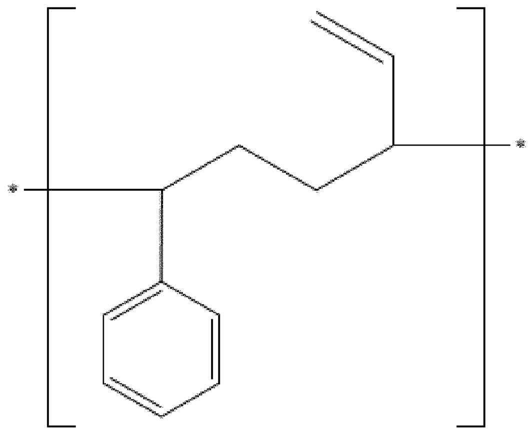

[Formule chimique 3]

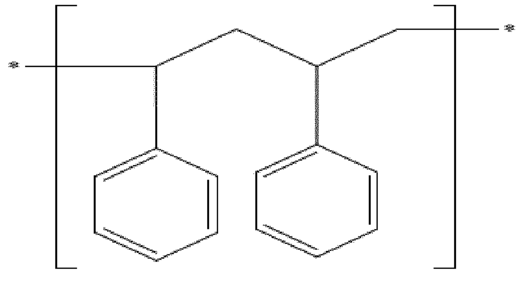

.

**3.** Câble pour pneumatique selon la revendication 1,
dans lequel le solvant inclut au moins un élément choisi parmi de l'eau, du toluène, du naphta, du méthanol, du xylène et du tétrahydrofurane.

4. Câble pour pneumatique selon la revendication 1,
dans lequel la couche d'adhésif comporte :

une couche de composé époxyde qui est disposée sur le support textile ; et
une couche de RFL qui est disposée sur la couche de composé époxyde et inclut du résorcinol-formaldéhyde-latex (RFL).

5. Câble pour pneumatique selon la revendication 1,
dans lequel le support textile inclut au moins un élément parmi un fil de fibre et un support textile.

6. Câble pour pneumatique selon la revendication 1,
dans lequel le support textile inclut un fil retors-torsadé hybride formé en soumettant ensemble à une torsion secondaire un fil de nylon ayant été soumis à une torsion primaire et un fil d'aramide ayant été soumis à une torsion primaire.

7. Câble pour pneumatique selon la revendication 6,
dans lequel le fil retors-torsadé hybride a un nombre de torsions de 150 TPM ou plus.

8. Procédé pour fabriquer un câble pour pneumatique comportant :

une étape de préparation d'un support textile ;
une étape de formation d'une couche d'adhésif sur le support textile ; et
une étape de formation d'une couche de latex sur la couche d'adhésif
dans lequel l'étape de formation de la couche d'adhésif inclut de déposer une solution de revêtement adhésif contenant du résorcinol-formaldéhyde-latex (RFL) sur le support textile et de la sécher,
l'étape de formation de la couche de latex inclut de déposer une dispersion de latex sur la couche d'adhésif et de la sécher,
dans lequel la dispersion de latex contient 10 à 30 % en poids d'un composant latex et 70 à 90 % en poids d'un solvant basé sur le poids total de la dispersion de latex, et
dans lequel le composant latex comporte au moins un élément choisi parmi un latex de caoutchouc naturel, un latex de caoutchouc styrène-butadiène, un latex de caoutchouc butadiène, un latex de caoutchouc chloroprène, un latex de caoutchouc isobutylène, un latex de caoutchouc isoprène, un latex de caoutchouc nitrile, un latex de caoutchouc butyle et un latex de caoutchouc néoprène.

9. Procédé selon la revendication 8,
dans lequel le solvant inclut au moins un élément choisi parmi de l'eau, du toluène, du naphta, du méthanol, du xylène et du tétrahydrofurane.

10. Procédé selon la revendication 8, comportant en outre une étape de formation d'une couche de composé époxyde sur le support textile, avant de déposer la solution de revêtement adhésif contenant du résorcinol-formaldéhyde-latex (RFL) sur le support textile.

11. Procédé selon la revendication 8,
dans lequel le support textile inclut au moins un élément parmi un fil de fibre et un support textile.

12. Procédé selon la revendication 8,
dans lequel l'étape de préparation du support textile comporte en outre une étape de formation d'un fil retors-torsadé hybride formé en soumettant ensemble à une torsion secondaire un fil de nylon ayant été soumis à une torsion primaire et un fil d'aramide ayant été soumis à une torsion primaire.

13. Procédé selon la revendication 12,
dans lequel l'étape de préparation du support textile comporte en outre une étape de préparation d'un support textile en tissant le fil retors-torsadé hybride.

14. Pneumatique comportant le câble pour pneumatique selon l'une quelconque des revendications 1 à 7.

15. Pneumatique selon la revendication 14,
le câble pour pneumatique étant appliqué sur au moins un élément parmi une nappe sommet, une ceinture et une carcasse.

【FIG. 1】

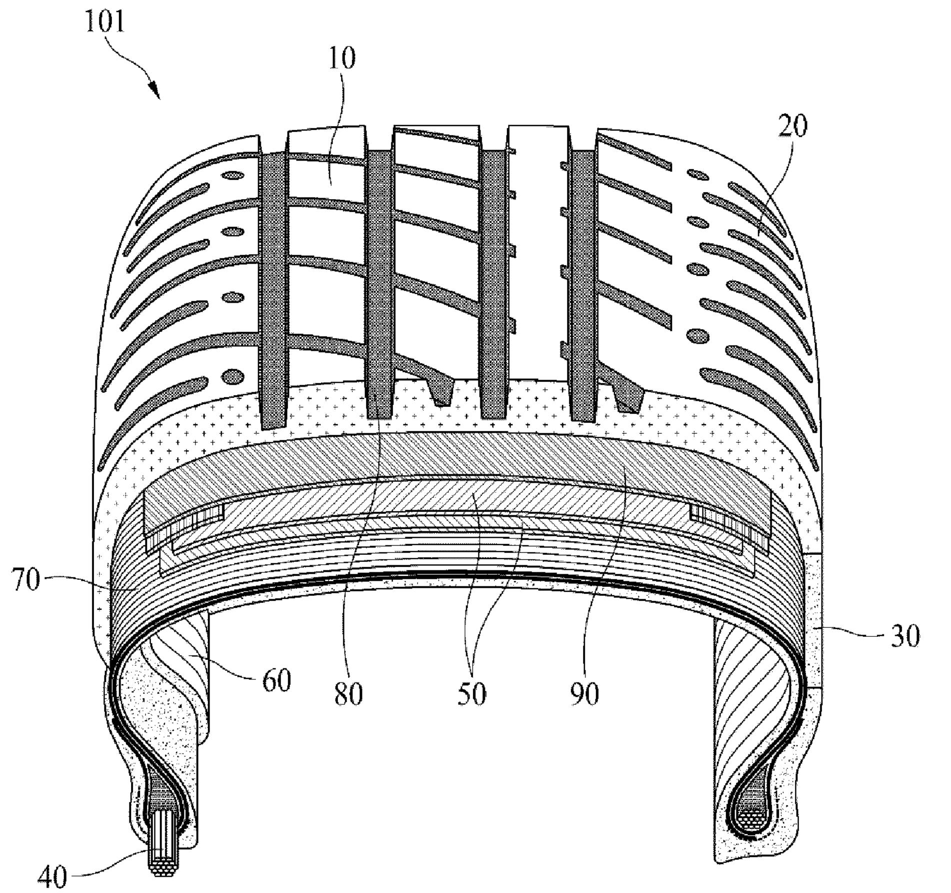

【FIG. 2】

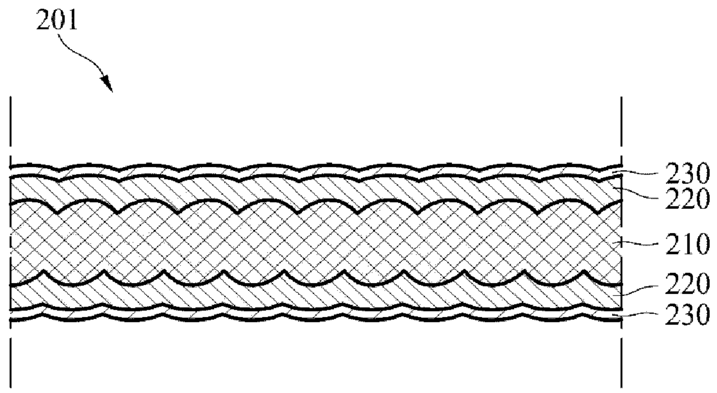


【FIG. 3】

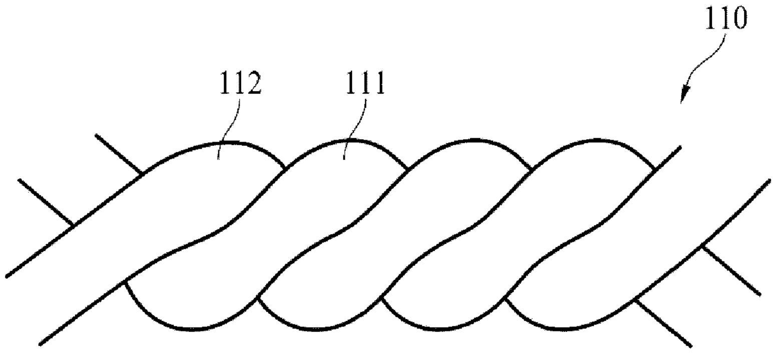

【FIG. 4】

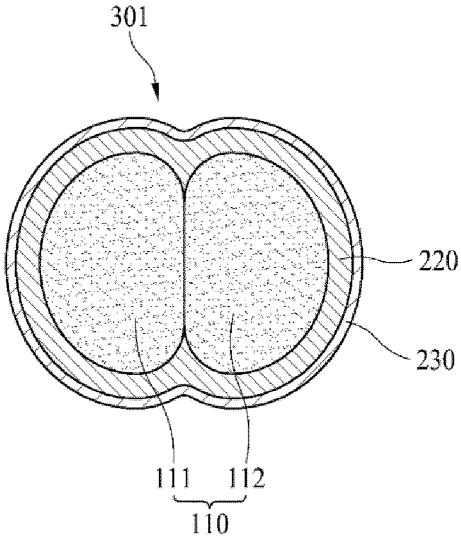


【FIG. 5】

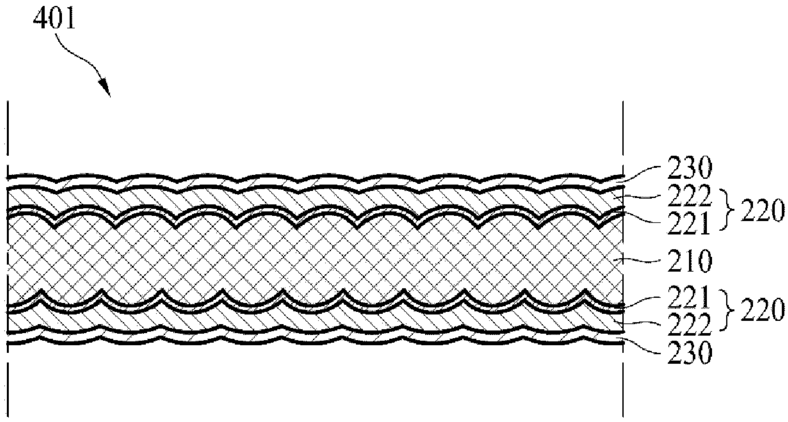

【FIG. 6】

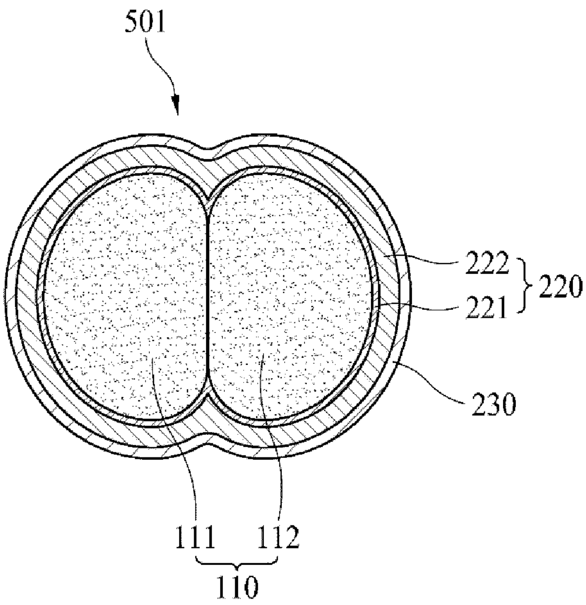

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1371680 A1
- EP 0695793 A2
- EP 2065220 A1
- EP 2839972 A1
- US 2012211139 A1